# EUROPÄISCHE PATENTANMELDUNG

(11) **EP 0 830 994 A1**
(43) Veröffentlichungstag der Anmeldung: **25.03.1998**
(21) Anmeldenummer: 96115314.5
(22) Anmeldetag: 24.09.1996
(51) Int. Cl.: B60R 25/00, B60R 21/00

(54) **Diebstahl- und Personenschutzvorrichtung für ein Kraftfahrzeug**

(71) Anmelder: SIEMENS AKTIENGESELLSCHAFT, 80333 München (DE)
(72) Erfinder: Bachhuber, Anton, 84085 Langquaid (DE); Röhrl, Thomas, 93092 Barbing (DE)

(57) **Zusammenfassung**

Eine Antenne (2) einer im Kraftfahrzeug angeordneten Sende- und Empfangseinheit (1) ist am Sicherheitsgurt (18) befestigt. Sobald sich der Fahrer anschnallt, wird ein tragbarer Transponder (6) von der Sende- und Empfangseinheit (1) aufgefordert, sein Codesignal auszusenden. Das Codesignal wird von der Sende- und Empfangseinheit (1) empfangen und auf seine Berechtigung geprüft. Bei Berechtigung wird die Wegfahrsperre (8) gelöst. Ebenso kann das Auslösen des Beifahrerairbags verhindert werden, falls ein Kindersitz durch eine beifahrerseitige Sende- und Empfangseinheit (1) auf dem Beifahrersitz erkannt wird.

## Beschreibung

Die Erfindung betrifft eine Diebstahlschutzvorrichtung für ein Kraftfahrzeug zum Freigeben einer Wegfahrsperre und eine Personenschutzvorrichtung zum Verhindern des Auslösens eines Beifahrerairbags, wenn ein Kindersitz auf dem Beifahrersitz angeordnet ist.

Eine bekannte Diebstahlschutzvorrichtung (DE 43 29 697 A1) weist einen auf einer Chipkarte integrierten Transponder und eine am Zündschloß angeordnete Sende- und Empfangseinheit auf. Sobald ein Zündschalter durch Drehen des Zündschlüssels im Zündschloß betätigt wird, wird ein Frage-Antwort-Dialog ausgelöst, bei dem ein Anforderungssignal an den Transponder geschickt, der daraufhin ein Codesignal zurücksendet. Bei Berechtigung des Codesignals wird die Wegfahrsperre freigegeben.

Bei einer solchen Diebstahlschutzvorrichtung kann jedoch die Chipkarte mit dem Transponder recht weit von dem Zündschloß entfernt sein, so daß ein recht starkes elektromagnetisches Feld erzeugt werden muß, um Signale zwischen dem Transponder und der Sende- und Empfangseinheit auszutauschen.

Eine weitere bekannte Diebstahlschutzvorrichtung (DE 32 06 434 A1) weist einen Sender auf, der in eine Aufnahmevorrichtung im Armaturenbrett gesteckt wird. Nach Betätigen eines Schalters des Senders wird ein Codesignal zu einem Empfänger in der Aufnahmevorrichtung ausgesendet. Bei berechtigtem Codesignal wird die Wegfahrsperre freigegeben.

Bei dieser Diebstahlschutzvorrichtung muß der Benutzer den Sender in die Aufnahmevorrichtung einführen, damit das Codesignal überhaupt übertragen werden kann.

Der Erfindung liegt das Problem zugrunde, eine Diebstahlschutz- und Personenvorrichtung zu schaffen, die einfach und sicher zu bedienen ist.

Dieses Problem wird erfindungsgemäß durch die Merkmale der Patentansprüche 1 und 11 gelöst. Dabei ist zumindest eine Antenne einer Codeerfassungseinheit am Sicherheitsgurt des Kraftfahrzeugs angeordnet.

Ein Benutzer, der seinen Codegeber bei sich in einer Tasche trägt, bringt die Antenne der Codeerfassungseinheit automatisch in die Nähe des Codegebers, sobald er sich auf den Fahrersitz setzt und sich gegebenenfalls angurtet. Da das Codesignal am besten empfangen werden kann, wenn der Fahrer angegurtet ist, wird der Fahrer veranlaßt, sich auch immer anzugurten, bevor er sein Fahrzeug startet.

Vorteilhafte Ausgestaltungen der Erfindung sind in den Unteransprüchen gekennzeichnet. So kann die komplette Codeerfassungseinheit auf dem Sicherheitsgurt angeordnet sein. Über drahtlos übertragene Signale kann die Codeerfassungseinheit mit einer Auswerteeinheit im Armaturenbrett kommunizieren.

Somit werden Kabel zur Verbindung der Codeerfassungseinheit mit der Auswerteeinheit eingespart.

Wenn ein Gurtschloßschalter im Gurtschloß angeordnet ist, der bei Schließen des Gurtes betätigt wird, so kann mit diesem Gurtschloßschalter der Frage-Antwort-Dialog zwischen der Codeerfassungseinheit sowie dem Codegeber eingeleitet werden. Dadurch wird nur nach dem Angurten ein Dialog ausgeführt und ansonsten wird der Benutzer nicht durch elektromagnetische Felder beeinträchtigt.

Bei einer Personenschutzvorrichtung mit Kindersitzerkennung können auch während der Fahrt Dialoge stattfinden, damit der Beifahrer-Airbag dann nicht ausgelöst wird, wenn sich ein Kindersitz auf dem Beifahrersitz befindet.

Ausführungsbeispiele der Erfindung werden im folgenden anhand der schematischen Zeichnungen näher erläutert. Es zeigen:
- Figur 1:: ein Blockschaltbild eines ersten Ausführungsbeispiels einer erfindungsgemäßen Diebstahlschutzvorrichtung,
- Figur 2:: ein Blockschaltbild eines zweiten Ausführungsbeispiels der Diebstahlschutzvorrichtung,
- Figuren 3 und 4:: Ansichten der erfindungsgemäßen Diebstahlschutzvorrichtung am Fahrersitz eines Kraftfahrzeugs und
- Figur 5:: eine Ansicht eines Ausführungsbeispiels einer erfindungsgemäßen Personenschutzvorrichtung mit Kindersitz.

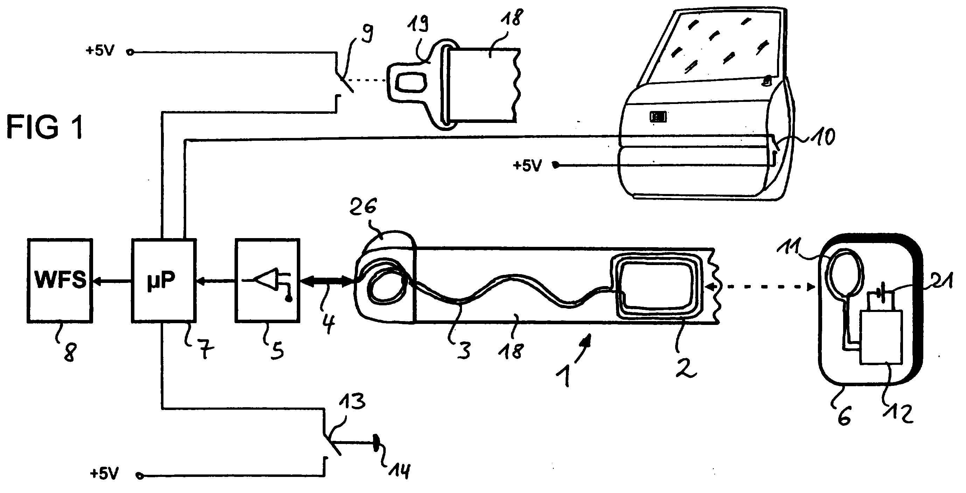

Eine erfindungsgemäße Diebstahlschutzvorrichtung weist eine Codeerfassungseinheit 1 auf, die im Fahrzeuginneren angeordnet ist. Die Codeerfassungseinheit 1 weist eine Antenne 2 (Figur 1) auf, die über ein flexibles Kabel 3 und weiter über eine im Kraftfahrzeug verlegte Datenleitung 4 mit einer Auswerteeinheit 5 elektrisch verbunden ist.

Ein tragbarer Codegeber 6 sendet ein Codesignal aus, das von der Antenne 2 der Codeerfassungseinheit 1 empfangen wird und in der Auswerteeinheit 5 mit einem erwarteten, dort gespeicherten oder erzeugten Sollcodesignal verglichen wird. Bei zumindest weitgehender Übereinstimmung wird das Ergebnis des Vergleichs einer Steuereinheit 7 mitgeteilt. Die Steuereinheit 7 erzeugt daraufhin ein Freigabesignal, das an ein Sicherheitsaggregat 8 des Kraftfahrzeugs gesendet wird.

Das Codesignal kann beispielsweise dann von dem Codegeber 6 ausgesendet werden, wenn er zuvor ein Anforderungssignal empfangen hat. Hierzu kann als Auslösemittel ein Schalter, wie ein Gurtschloßschalter 9, ein Türschalter 10, ein Tastschalter oder ein Türgriff betätigt werden, wodurch die Codeerfassungseinheit 1 über die Steuereinheit 7 durch ein Auslösesignal angewiesen wird, das Anforderungssignal zu dem Codegeber 6 (im Falle eines Frage-Antwort-Dialogs wird dieser als Transponder bezeichnet) zu senden.

Der Codegeber 6 empfängt das Anforderungssignal mit einer Sende- und Empfangsantenne 11 und bildet in einer Codiereinheit 12 das Codesignal, das über die Sende- und Empfangsantenne 11 zurück zu der Codeerfassungseinheit 1 gesendet wird und dort von der Antenne 2 empfangen wird. Bei berechtigtem Codesignal wird dann das Sicherheitsaggregat 8 freigegeben.

Als Sicherheitsaggregat 8 kann beispielsweise ein Steuergerät einer Wegfahrsperre, eine Motorsteuergerät, Zündsteuergerät, Kraftstoffzufuhrventil und/oder funktionell gleichwertige Geräte verwendet werden, durch die ein Fahren und Benutzen des Kraftfahrzeugs ermöglicht wird.

Sobald ein Zündschalter 13, beispielsweise durch Betätigen eines Startknopfes 14 oder durch Drehen des Zündschlüssels 16 im Zündschloß 17 geschlossen wird, so kann der Motor gestartet werden. Wenn das Codesignal mit dem Sollcodesignal übereingestimmt hat, so wird das Sicherheitsaggregat 8 freigegeben, so daß der Motor weiterlaufen kann. Stimmen jedoch die beiden Codesignale nicht überein, so wird der Motor wieder stillgesetzt. Die Funktion des Sicherheitsaggregats 8 zusammen mit der Authentifikation durch den Codegeber 6 wird auch als elektronische Wegfahrsperre bezeichnet.

Erfindungsgemäß ist zumindest die Antenne 2 der Codeerfassungseinheit 1 auf dem - fahrerseitigen - Sicherheitsgurt, beispielsweise in Form einer Spule angeordnet. Ein Sicherheitsgurt weist ein Gurtband 18 aus einem hochfesten Material auf, das eine Person bei einem Unfall auf dem Sitz halten und so Verletzungen durch Aufprall verhindern soll. Wenn der Fahrer in sein Kraftfahrzeug einsteigt und sich angurtet, so rastet er eine Gurtschnalle 19 des Sicherheitsgurtes in ein Gurtschloß 20 ein. Dabei kann der Gurtschloßschalter 9 betätigt werden, der daraufhin die Steuereinheit 7 anweist, den Frage-Antwort-Dialog einzuleiten.

Wenn die Antenne 2 derart auf dem Gurtband 18 angeordnet ist, daß sie bei geschlossenem Sicherheitsgurt im Bereich der Brust des Benutzers liegt, so ist die Antenne 2 nahe beim Codegeber 6, den der Benutzer bei sich trägt. Der Benutzer braucht keine Taste des Codegebers 6 zu betätigen um den Frage-Antwort-Dialog auszulösen. Es genügt das Angurten und demzufolge das damit verbundene Betätigen des Gurtschloßschalters 9.

Der Codegeber 6 kann eine separate Energiequelle 21 in Form einer Knopfzelle oder eines aufladbaren Akkumulators aufweisen. Die Energiequelle 21 kann auch als Kondensator ausgebildet sein, der durch Energiesignale geladen wird, die von der Antenne 2 ausgesendet werden. Die Energiesignale können in dem Anforderungssignal enthalten sein. Ebenso kann es genügen, nur die Energiesignale zu dem Codegeber 6 zu senden. Sobald der Kondensator genügend geladen ist, wird das Codesignal im Codegeber 6 erzeugt.

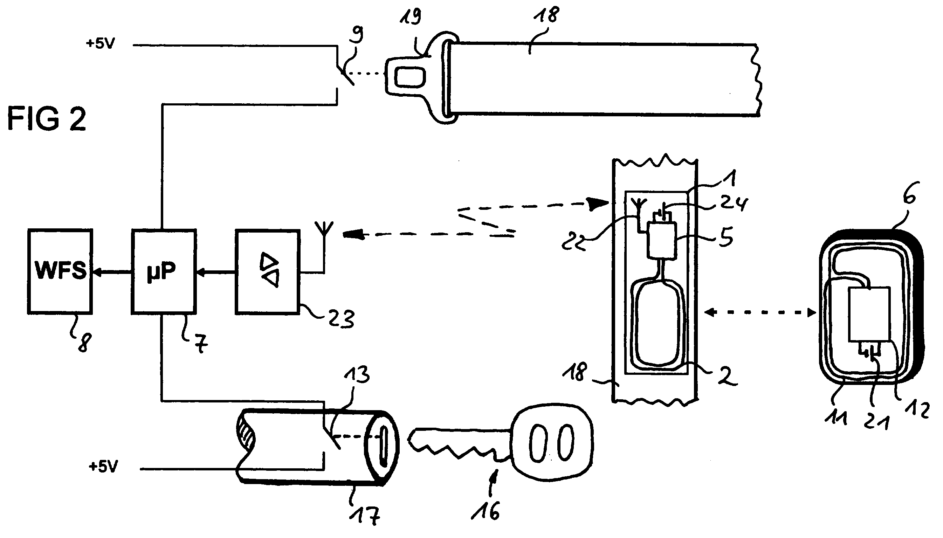

In Figur 2 ist ein weiteres Ausführungsbeispiel der Erfindung gezeigt. Elemente gleicher Funktion haben die gleichen Bezugszeichen wie in Figur 1. Bei diesem Ausführungsbeispiel ist die komplette Codeerfassungseinheit 1 auf dem Gurtband 18 angeordnet. Die Codeerfassungseinheit 1 kann aber auch auf der Gurtschnalle 19 angeordnet sein.

Die Kommunikation zwischen der Steuereinheit 7 und der Codeerfassungseinheit 1 geschieht nun nicht wie bei dem Ausführungsbeispiel nach Figur 1 kontaktbehaftet über die Datenleitung 4, sondern durch drahtlose Funksignale. Hierzu weist die Codeerfassungseinheit 1 einen Sende- und Empfangseinheit 22 für HF- oder Ultraschallsignale auf, die drahtlos mit einer Sende- und Empfangseinheit 23 für HF- oder Ultraschallsignale der Steuereinheit 7 kommunizieren.

Eine solche Codeerfassungseinheit 1 weist eine Energiequelle 24 in Form einer Knopfzelle oder eines aufladbaren Akkumulators auf. Die Energiequelle 24 kann auch als Kondensator ausgebildet sein, der durch Energiesignale z.B. von der Steuereinheit 7 drahtlos geladen wird. Ebenso können Solarzellen im Kraftfahrzeug vorhanden sein, über die Energie dem Kondensator zugeführt wird. Die Energiesignale können in dem Auslösesignal enthalten sein. Ebenso genügt es, nur die Energiesignale zu der Codeerfassungseinheit 1 zu senden. Sobald die Energiequelle 24 genügend geladen ist, wird das Anforderungssignal erzeugt. Allerdings muß noch genügend Energie vorhanden sein, um das Codesignal zu empfangen und auszuwerten.

Die Codeerfassungseinheit 1 kann ihre Energie auch über ein zusätzlich verlegtes Kabel erhalten, das an die Fahrzeugbatterie oder an eine sonstige Spannungs-/Energiequelle im Fahrzeug angeschlossen ist.

Sobald der Gurtschloßschalter 9 oder der Türschalter 10 betätigt wird, steuert die Steuereinheit 7 seine Sende- und Empfangseinheit 23 an, die daraufhin das Auslösesignal drahtlos zu der Codeerfassungseinheit 1 sendet. Folglich sendet die Codeerfassungseinheit 1 das Anforderungssignal über ihre Antenne 2 zu dem Codegeber 6, der daraufhin mit seinem Codesignal antwortet.

Das Codesignal wird in der Auswerteeinheit 5 der Codeerfassungseinheit 1 mit einem erwarteten Sollcodesignal verglichen. Das Ergebnis des Vergleichs wird in codierter Form über die Sende- und Empfangseinheiten 22 und 23 zu der Steuereinheit 7 zurückgesendet. Sobald nun der Zündschlüssel 16 im Zündschloß 17 verdreht oder der Startknopf 14 betätigt wird, wird der Motor gestartet.

Falls das Codesignal mit dem Sollcodesignal übereingestimmt hat, so bleibt der Motor eingeschaltet und die Wegfahrsperre gelöst, da durch die Steuereinheit 7 das Freigabesignal erzeugt wurde. Falls keine Übereinstimmung der beiden Codesignale besteht, so wird der Motor wieder abgeschaltet.

Der Motor kann aber auch erst dann gestartet werden, wenn das Freigabesignal vorliegt. Allerdings vergeht dann relativ viel Zeit, da zunächst der Frage-Antwort-Dialog erfolgreich durchgeführt werden muß, bevor der Startvorgang eingeleitet wird.

Bei einem weiteren Ausführungsbeispiel, das hier nicht dargestellt ist, kann die Auswerteeinheit 5 in der Steuereinheit 7 und nur die Antenne 2 zusammen mit der Sende- und Empfangseinheit 22 sowie der Energiequelle 24 auf dem Gurtband 18 angeordnet sein. Die Sende- und Empfangseinheit 22 dient dann lediglich zum unveränderten weiterleiten des Codesignals oder des Anforderungssignal. Eine leitungsgebundene, elektrische Verbindung zwischen der Steuereinheit 7 und dem Sicherheitsgurt wird dann nicht benötigt.

Die Antenne 2 kann auch als zwei- oder mehrgeteilte Antenne in Form von mehreren Spulen jeweils mit einigen Windungen ausgebildet sein. Mit mehreren Spulen läßt sich gut die Position des Codegebers 6 erkennen, da jede Spule ihren eigenen Empfangsbereich hat. Ganz genau läßt sich die Position erfassen, wenn sich der Codegeber 6 im Überlappungsbereich der Empfangsbereiche von mehreren Spulen befindet.

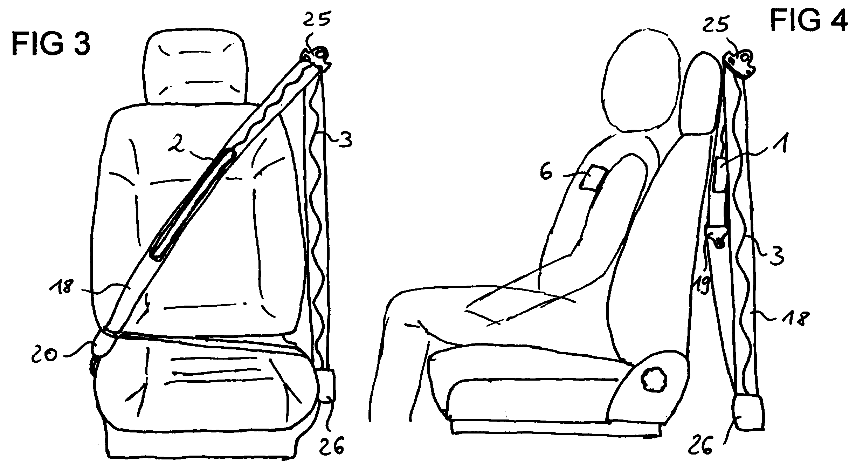

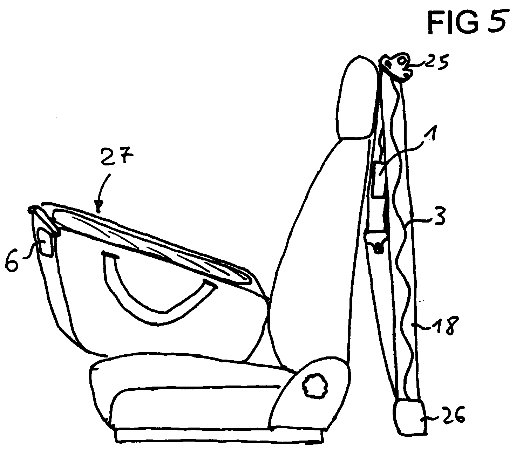

Im folgenden wird die Erfindung beispielhaft unter Verwendung von Dreipunkt-Automatiksicherheitsgurten (Figuren 3 und 4) erklärt. Die Antenne 2 kann dabei als Spule auf dem Gurtband 18 in der Nähe der Gurtschnalle 19 angeordnet sein, so daß sie im Bereich des Fahrers liegt, wenn der Gurt in das Gurtschloß 20 eingerastet ist (der Übersichtlichkeit halber ist in der Figur 3 der auf dem Sitz befindliche Fahrer nicht dargestellt).

Durch eine Gurtaufhängung 25 an der B-Säule liegt der Gurt bei einem Dreipunktgurt diagonal über dem Körper des Fahrers. Über das flexible Kabel 3, das in das Gurtband 18 eingeflochten sein kann, wird die Antenne 2 elektrisch mit der Datenleitung 4 und weiter mit der Auswerteeinheit 5 verbunden. Das Kabel 3 ist ab der Antenne 2 in das gesamte Gurtband 18 eingeflochten, aufgeklebt, mit einer elastischen Gußmasse vergossen oder auf sonstige, funktionell gleichwertige Weise an dem Gurtband 18 befestigt. Demzufolge ist das Kabel 3 auch aufgerollt in einer Gurtrückholspule 26, durch die das Gurtband 18 gestrafft wird.

An die Gurtrückholspule 26 ist die Datenleitung 4 (dies kann ein Kabelstrang des Bordnetzes oder ein Fahrzeugbus sein, wobei zusätzlich eine Sendeeinheit mit Verstärker in der Gurtrückholspule 26 angeordnet sein kann, durch die die Signale zwischen der Antenne 2 und der Auswerteeinheit 5 ausgetauscht werden) angeschlossen, über die die Antenne 2 Signale von der Steuereinheit 7 empfängt oder an diese sendet.

Wenn ein Fahrer nicht angeschnallt ist, so hängt das Gurtband 18 - teilweise in die Gurtrückholspule aufgerollt - in der Nähe der Tür (vgl. Figur 4). Falls der Fahrer im nicht angeschnallten Zustand sein Kraftfahrzeug starten möchte, so kann eine optische oder akustische Warnung ausgegeben werden, wodurch er darauf hingewiesen wird, daß er nicht angeschnallt ist. Diese Warnung wird dann erzeugt, wenn der Gurtschloßschalter 9 nicht betätigt, jedoch der Zündschalter 13 betätigt wird.

Damit der Fahrer dennoch den Motor starten kann, muß die Reichweite des Codesignal des Codegebers 6 groß genug sein, damit es von der Codeerfassungseinheit 1 empfangen werden kann. Vorteilhafterweise ist die Antenne 2 nicht weit von der Gurtschnalle 19 entfernt und über einen größeren Bereich des Gurts ausgedehnt angeordnet. Falls der Codegeber 6 von dem Benutzer in seiner Hemd- oder Hosentasche getragen wird, so befindet sich der Codegeber 6 nahe genug bei der Antenne 2. Selbst wenn der Codegeber 6 in einer Handtasche in unmittelbarer Umgebung des Fahrersitzes abgelegt wird, so reicht die Reichweite der Antenne 2 sowie der Sende- und Empfangsantenne 11 aus, den Dialog durchzuführen.

Falls die Antenne 2 als Spule ausgebildet ist, so werden Signale induktiv ausgesendet und empfangen. Solche Signale haben eine Reichweite von etwa ein bis zwei Meter, so daß Signale, die im Bereich des Fahrersitzes ausgesendet werden, empfangen werden. Als Spule kann die Antenne 2 sowohl Signale empfangen als auch welche an den Codegeber 6 senden.

Falls der Fahrer nicht angeschnallt ist, so kann als Auslösung des Anforderungssignals das Schließen des Zündschalters 13 dienen. Ebenso ist es möglich, den ohnehin vorhandenen Türschalter 10 zu verwenden. Der Türschalter 10 wird betätigt, sobald die Tür geöffnet wird. Üblicherweise wird damit das Innenlicht eingeschaltet. Bei der Erfindung kann der Türschalter 10 durch das Auslösesignal über die Steuereinheit 7 veranlassen, daß das Anforderungssignal unmittelbar nach Öffnen der Tür von der Antenne 2 - möglicherweise mehrfach wiederholt - ausgesendet wird.

Als Auslösemittel kann auch ein Tastschalter in der Gurtschnalle 19 angeordnet sein. Sobald die Gurtschnalle 19 vom Benutzer angefaßt wird, wird dieser Tastschalter betätigt. Infolgedessen wird das Anforderungssignal ausgelöst, woraufhin das Codesignal zurückgesendet wird. Der Tastschalter kann dabei als Berührungsschalter, Druckschalter oder auf sonstige funktionell gleichwertige Weise ausgebildet sein.

Das Anforderungssignal kann auch um eine kurze Zeitspanne zeitverzögert nach Öffnen der Tür ausgesendet werden, wodurch dem Fahrer Zeit gegeben wird, sich zu setzen und sich gegebenenfalls anzuschnallen. Hierzu weist die Steuereinheit 7 eine nicht dargestellte, für sich bekannte Zeitverzögerungsschaltung auf, die die Codeerfassungseinheit 1 erst nach einer vorgegebenen Wartezeit anweist, das Anforderungssignal auszusenden.

Die erfindungsgemäße Diebstahlschutzvorrichtung kann selbstverständlich auch bei anderen Arten von Sicherheitsgurten, wie Beckengurten, Hosenträgergurten, Rucksackgurten und dergleichen verwendet werden. Wesentlich für die Erfindung ist, daß zumindest die Antenne 2 oder auch die komplette Codeerfassungseinheit 1 auf dem Gurtband 18 angeordnet ist. Die Antenne 2 oder die Codeerfassungseinheit 1 müssen dabei gut auf dem Gurtband 18 befestigt sein, damit sich selbst bei einem Unfall oder in Situationen, in denen sich der Gurt automatisch stramm zieht, nicht vom Gurtband 18 ablösen.

Die Antenne 2 der Codeerfassungseinheit 1 ist vorteilhafterweise als Spule mit mehreren Windungen ausgebildet, die dann etwa rechteckförmig auf dem Gurtband 18 mit mehreren Windungen gewickelt angeordnet ist (vgl. Figuren 1 oder 3). Die Antenne 2 kann dabei auf einer Länge bis zu etwa 1m auf dem Gurtband 18 ausgedehnt sein. Mit einer solchen Antenne 2 werden Signale induktiv bei einer Frequenz von beispielsweise 125 kHz zu der Sende- und Empfangsantenne 11 des Codegebers 6, die vorteilhafterweise auch als Spule ausgebildet ist, gesendet.

Allerdings können die Signale zwischen der Codeerfassungseinheit 1 und dem Codegeber 6 auch durch HF-Signale bei einer Frequenz von beispielsweise 433 MHz übertragen werden. Es können auch HF-Signale mit Frequenzen im GHz-Bereich verwendet werden. Hierzu werden dann geeignete HF-Antennen sowohl in der Codeerfassungseinheit 1 als auch im Codegeber 6 benötigt, wie sie für sich bekannt sind. Eine solche HF-Antenne kann beispielsweise als Streifenleiter ausgebildet sein, der sich auf einer flexiblen Leiterplatte befindet und entlang des Gurts angeordnet ist. Es genügt auch ein kurzes Stück Kabel als HF-Antenne.

Die Kommunikation zwischen der Codeerfassungseinheit 1 und der Steuereinheit 7 (falls sich die Codeerfassungseinheit 1 auf dem Gurtband 18 befindet) kann sowohl induktiv als auch durch HF-Signale bewerkstelligt werden. Ultraschallsignale sind mit gewissen Einschränkungen auch geeignet.

Als Sicherheitsaggregat 8 kann ein Motorsteuergerät, ein elektromagnetisches Sperrventil für die Kraftstoffzufuhr, ein Ein- oder Ausschalter für das Zündsystem, eine Lenkradsperre oder sonstige Verriegelungseinheit sein. Für die Erfindung ist es dabei unwesentlich, welches Sicherheitsaggregat 8 freigegeben wird, sondern allein die Tatsache, daß durch das Sicherheitsaggregat 8 - nach erfolgter Authentifikation - ein Benutzen des Kraftfahrzeugs ermöglicht wird.

Der Codegeber 6 kann auf einer scheckkartengroßen Karte oder auf einem herkömmlichen mechanischen Schlüssel angeordnet sein. Solch ein Codegeber 6 kann der Benutzer in seiner Hemdtasche, Jackentasche, Hosentasche oder Handtasche bequem tragen. Der Benutzer braucht den Codegeber 6 nicht hervorzuholen, um die Wegfahrsperre zu lösen. Für die Erfindung ist es jedoch unerheblich, welche äußere, mechanische Ausgestaltung der Codegeber 6 aufweist. Der Codegeber 6 kann überdies dazu verwendet werden, die Tü

ren des Kraftfahrzeugs zu ver- oder entriegeln. Hierzu kann der Codegeber 6 einen Tastschalter aufweisen, bei dessen Betätigung ein Codesignal zum Ver- oder Entriegeln ausgesendet wird.

Wenn allein die Antenne 2 auf dem Gurtband 18 angeordnet ist, so kann die restliche Codeerfassungseinheit 1 in der Nähe des Zündschlosses 17, auf dem Armaturenbrett oder in der Mittelkonsole angeordnet sein. Für die Erfindung ist es jedoch unwesentlich, wo die Codeerfassungseinheit 1 angeordnet ist. Wesentlich ist nur, daß sie das Codesignal, das von der Antenne 2 empfangen und an die Auswerteeinheit 5 weitergeleitet wird, mit dem Sollcodesignal vergleicht und bei zumindest weitgehender Übereinstimmung das Freigabesignal erzeugt.

Der Frage-Antwort-Dialog zwischen der Antenne 2 und dem Codegeber 6 kann auch mit dem Entriegeln der Fahrzeugtüren ausgelöst werden. Über die Antenne 2 wird dann das Anforderungssignal periodisch mit dazwischenliegenden Pausen ausgesendet. In den Pausen wird auf das Codesignal des Codegebers 6 gewartet. Das Aussenden des Anforderungssignals wird dann beendet, wenn die Gurtschnalle 19 in das Gurtschloß 20 einrastet oder das Codesignal empfangen und ausgewertet wurde.

Wenn sich der Fahrer anschnallt, so wird die Antenne 2 durch das Anlegen des Sicherheitsgurtes über den Benutzer hinweg bewegt. Dabei kommt die Antenne 2 mit großer Sicherheit in die Nähe des Codegebers 6, um das Codesignal gut zu empfangen.

Falls die Antenne 2 und die Sende- und Empfangsantenne 11 als Spulen ausgebildet sind, so kann die magnetische Gegeninduktion beim Angurten ausgenutzt werden. Wird die stromdurchflossene Antenne 2 über die Sende- und Empfangsantenne 11 bewegt, so wird dort eine Induktionsspannung erzeugt, die einen Stromfluß hervorruft, durch den die Energiequelle 21 geladen werden kann. Wird dadurch genug Energie erzeugt, so kann das Angurten als Auslösemittel zum Aussenden des Codesignal dienen.

Die Antenne 2 kann auf/an/in dem Gurtband 18, der Gurtschnalle 19, dem Gurtschloß 20, der Gurtaufhängung 25 oder der Gurtrückholspule 26 angeordnet sein.

Das Anforderungssignal, das Codesignal und das Freigabesignal sind binäre, nach einer mathematischen Rechenvorschrift codierte Signale, die bei Empfang decodiert und mit erwarteten Sollsignalen verglichen werden.

Zur Codierung können bei der Erfindung sogenannte Festcodes verwendet werden, bei denen die Signale immer gleich bleiben.

Es können auch sogenannte Wechselcodes verwendet werden, bei denen sich die Signale bei jedem Aussenden gegenüber den unmittelbar vorhergehenden unterscheiden. Ebenso können sogenannte Kryptoalgorithmen verwendet werden, bei denen eine Zufallszahl von einer Einheit zu einer zweiten Einheit gesendet wird. Aus der Zufallszahl bildet sowohl die erste als auch die zweite Einheit ein Codesignal mit Hilfe eines Kryptoalgorithmus. Das von der zweiten Einheit zurückgesendete Codesignal wird dann in der ersten mit dessen Codesignal verglichen. Ein Auslesen des Kryptoalgorithmus ist dabei nicht möglich, so daß solche System sicher gegen Abhören sind.

Die Antenne 2 kann auch auf dem beifahrerseitigen Sicherheitsgurt angeordnet sein. Falls bei dem Frage-Antwort-Dialog auf der Fahrerseite kein Codesignal empfangen wird, so kann der Dialog auch auf der Beifahrerseite erfolgen. Wenn überhaupt kein Codesignal empfangen wird, so kann der Benutzer durch eine optische oder akustische Warnung auf diesen Fehler hingewiesen werden.

Falls die Antenne 2 auf dem beifahrerseitigen Sicherheitsgurt angeordnet ist, so kann sie auch zum Erkennen eines Kindersitzes 27 (Figur 5) dienen, damit ein im Kraftfahrzeug gegebenenfalls vorhandene Beifahrerairbag in diesem Falle nicht ausgelöst wird, wenn sich der Kindersitz 27 auf dem Beifahrersitz befindet. Die Steuerung der Codeerfassungseinheit 1 mit ihrer Antenne 2 und des Airbags als Sicherheitsaggregat 8 übernimmt dabei die Steuereinheit 7.

Bei einer solchen Personenschutzvorrichtung wird der Codegeber 6 durch das Anforderungssignal aufgefordert, sein Codesignal zurückzusenden. Wenn das Codesignal empfangen wird, so ist ein Kindersitz 27 auf dem Beifahrersitz. Allerdings darf hierzu die Reichweite des über die Antenne 2 ausgesendeten Anforderungssignals nicht zu groß sein, damit nur ein Codegeber 6 eines Kindersitzes 27 auf dem Beifahrersitz, nicht aber auf dem Rücksitz erkannt wird.

Das Anforderungssignal kann bei einer solchen Personenschutzvorrichtung ständig wiederholt während des Betriebs des Kraftfahrzeugs ausgesendet werden, d.h. solange der Beifahrergurt mit seiner Gurtschnalle 19 in dem Gurtschloß 20 eingerastet und der Gurtschloßschalter 9 betätigt ist.

Es kann auch vorgesehen sein, daß das Anforderungssignal nur bei Bewegung des Gurtbandes 18 oder bei Betätigung des Gurtschlosses 20 während der Fahrt ausgelöst wird. Folglich wird festgestellt, ob der Kindersitz 27 noch vorhanden ist oder der Kindersitz 27 noch in seiner korrekten Position auf dem Sitz angeordnet ist, d.h. ob der Kindersitz 27 während der Fahrt entfernt oder aus Lage bewegt wird.

Die Bewegung des Gurts wird beispielsweise mit Hilfe eine Dehnungsmeßstreifen im Gurtband 18 erfaßt. Die Betätigung des Gurtschlosses 20 wird durch Schalten des Gurtschloßschalters 9 erfaßt.

## Patentansprüche

1. Diebstahlschutzvorrichtung für ein Kraftfahrzeug mit
- einem tragbaren Codegeber (6), der nach Aufforderung ein Codesignal aussendet, und mit
- einer im Kraftfahrzeug angeordneten Codeerfassungseinheit (1), die das Codesignal über eine Antenne (2) empfängt, an eine Auswerteeinheit (5) weiterleitet, wo das Codesignal mit einem erwarteten Sollcodesignal verglichen wird und bei Übereinstimmung ein Freigabesignal über eine Steuereinheit (7) an ein Sicherheitsaggregat (8) gesendet wird,
**dadurch gekennzeichnet,** daß die Antenne (2) der Codeerfassungseinheit (1) auf dem Sicherheitsgurt (18, 19, 20, 25, 26) angeordnet ist.

2. Diebstahlschutzvorrichtung nach Anspruch 1, dadurch gekennzeichnet, daß die Antenne (2) über ein flexibles Kabel (3) mit der Codeerfassungseinheit (1) verbunden ist.

3. Diebstahlschutzvorrichtung nach Anspruch 1, dadurch gekennzeichnet, daß die Auswerteeinheit (5) auf dem Sicherheitsgurt (18, 19, 20, 25, 26) angeordnet ist.

4. Diebstahlschutzvorrichtung nach Anspruch 1 oder 3, dadurch gekennzeichnet, daß eine Sende- und Empfangseinheit (22) auf dem Sicherheitsgurt (18, 19, 20, 25, 26) angeordnet ist, die Signale von der Steuereinheit (7) empfängt und Signale zu dieser drahtlos sendet.

5. Diebstahlschutzvorrichtung nach einem der vorhergehenden Ansprüche, dadurch gekennzeichnet, daß sie ein Auslösemittel (9, 10) aufweist, durch das die Codeerfassungseinheit (1) veranlaßt wird, ein Anforderungssignal an den Codesender zu senden, infolgedessen dieser das Codesignal zurücksendet.

6. Diebstahlschutzvorrichtung nach Anspruch 5, dadurch gekennzeichnet, daß das Auslösemittel (9, 10) ein Gurtschloßschalter (9) in einem Gurtschloß (20) des Sicherheitsgurts (18, 19, 20, 25, 26) ist, der beim Einrasten der Gurtschnalle (19) in das Gurtschloß (20) betätigt wird.

7. Diebstahlschutzvorrichtung nach Anspruch 5, dadurch gekennzeichnet, daß das Auslösemittel (9, 10) ein Türschalter (10) in der Tür ist, der beim Öffnen der Tür betätigt wird.

8. Diebstahlschutzvorrichtung nach Anspruch 7, dadurch gekennzeichnet, daß die Steuereinheit (7) eine Zeitverzögerungsschaltung aufweist, durch das das Anforderungssignal erst nach einer vorgegebenen Zeitdauer nach Betätigen des Türschalters (10) ausgelöst wird.

9. Diebstahlschutzvorrichtung nach einem der vorhergehenden Ansprüche, dadurch gekennzeichnet, daß die Antenne (2) als Sende- und Empfangsantenne in Form einer Spule ausgebildet ist und durch induktive Übertragung Signale sendet und empfängt.

10. Diebstahlschutzvorrichtung nach einem der vorhergehenden Ansprüche, dadurch gekennzeichnet, daß das Sicherheitsaggregat (8) ein Wegfahrsperrensteuergerät, ein Motorsteuergerät, ein Sperrventil für die Kraftstoffzufuhr, ein Einschalter für den Zündstrom oder eine Lenkradsperre ist.

11. Personenschutzvorrichtung für ein Kraftfahrzeug mit einer im Kraftfahrzeug angeordneten Codeerfassungseinheit (1), die ein Anforderungssignal zu einem Codegeber (6) aussendet, der daraufhin ein Codesignal über eine Antenne (2) empfängt, an eine Auswerteeinheit (5) weiterleitet, wo das Codesignal mit einem erwarteten Sollcodesignal verglichen wird und bei Übereinstimmung ein Freigabesignal über eine Steuereinheit (7) an ein Sicherheitsaggregat (8) gesendet wird,
**dadurch gekennzeichnet,** daß die Antenne (2) der Codeerfassungseinheit (1) auf dem Sicherheitsgurt (18, 19, 20, 25, 26) angeordnet ist.

12. Personenschutzvorrichtung nach Anspruch 11, dadurch gekennzeichnet, daß der Codegeber (6) an einem Kindersitz (27) angeordnet ist und das Sicherheitsaggregat (8) ein Airbag ist.
